(19) Europäisches Patentamt
European Patent Office
Office européen des brevets

(11) EP 2 308 674 B1

(12) EUROPEAN PATENT SPECIFICATION

(45) Date of publication and mention of the grant of the patent:
**11.09.2013 Bulletin 2013/37**

(21) Application number: **09803038.0**

(22) Date of filing: **31.07.2009**

(51) Int Cl.:
***B32B 5/32*** $^{(2006.01)}$ ***H01M 2/16*** $^{(2006.01)}$

(86) International application number:
**PCT/JP2009/063635**

(87) International publication number:
**WO 2010/013800 (04.02.2010 Gazette 2010/05)**

(54) **MULTILAYER MICROPOROUS MEMBRANE, METHOD FOR PRODUCING SAME AND BATTERY SEPARATOR**

MIKROPORÖSE MEHRSCHICHTIGE MEMBRAN, HERSTELLUNGSVERFAHREN DAFÜR UND BATTERIESEPARATOR

MEMBRANE MICROPOREUSE MULTICOUCHE, PROCÉDÉ POUR SA PRODUCTION ET SÉPARATEUR DE BATTERIE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **31.07.2008 JP 2008198163**

(43) Date of publication of application:
**13.04.2011 Bulletin 2011/15**

(73) Proprietor: **Asahi Kasei E-materials Corporation**
**Tokyo 101-8101 (JP)**

(72) Inventors:
- **MANAGO, Teruaki**
  **Tokyo 101-8101 (JP)**
- **AZAMI, Yoko**
  **Tokyo 101-8101 (JP)**

(74) Representative: **von Kreisler Selting Werner**
**Deichmannhaus am Dom**
**Bahnhofsvorplatz 1**
**50667 Köln (DE)**

(56) References cited:
**EP-A1- 2 261 275**
**WO-A1-2008/143005**
**JP-A- 6 256 555**
**JP-A- 8 034 872**
**JP-A- 8 099 382**
**JP-A- 2001 085 061**
**JP-A- 2008 144 039**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 308 674 B1

## Description

### Technical Field

The present invention relates to a laminated microporous film and a method for manufacturing the same, and a separator for a battery.

### Background Art

Microporous films, particularly polyolefinic microporous films are used for microfiltration membranes, separators for batteries, separators for capacitors, materials for fuel cells, and the like, and suitably used particularly as separators for lithium ion batteries. Lithium ion batteries have recently been used in application to small electronic devices such as cellphones and laptop personal computers while application of hybrid electric vehicles has been attempted.

Here, for lithium ion batteries for hybrid electric vehicles, a higher power characteristic to extract much energy in a short time is required. Further since lithium ion batteries for hybrid electric vehicles generally require a large size and a high energy capacity, a higher safety is required to be secured.

Separators for batteries equipped in lithium batteries are also considered to be essentially provided with a shutdown (SD) function to secure the safety. The SD function is a function for terminating the battery reaction to prevent a further temperature increase in the interior of a battery by drastically increasing the electric resistance of a separator for the battery when the temperature in the interior of the battery excessively rises. Examples of the mechanisms to develop the SD function include, in the case of a microporous film separator for a battery, closing pores of the porous structure to make the separator nonporous to shut off the ion permeation when the temperature in the interior of a battery rises to a predetermined temperature. However, even if the ion permeation is shut off by making the separator nonporous in such a way, when the temperature rises further and a whole film comes to melt and break, the separator cannot provide electric insulation. A temperature at which a film comes to be not able to retain its form and shut off the ion permeation is called a film rupture temperature, and a separator for a battery with a higher film rupture temperature is better in heat resistance. A separator with a larger difference between the film rupture temperature and a temperature at which the SD starts is better in safety.

Having an object to provide a microporous film to become a separator capable of coping with such a situation, for example, Patent Literature 1 proposes a composite microporous film (separator for a battery) having a laminated structure obtained by laminating a polypropylene microporous film on a conventional polyethylene microporous film.

Patent Literature 2 discloses a laminated microporous film formed of a polypropylene having a specific weight-average molecular weight.

### Prior Art

#### Patent Literature

Patent Literature 1: Japanese Patent No. 3003830
Patent Literature 2: Japanese Patent No. 3939778

EP-A-2261275 represents a prior art disclosure under Art. 54 (3) EPC which discloses in Example 5 a three-layer microporous film.

### Disclosure of Invention

#### Problems to be solved by the Invention

Use of a polypropylene in Patent Literature 1 is for raising the film rupture temperature. However, since the polypropylene resin disclosed in Patent Literature 1 is one having a relatively low molecular weight, the film rupture resistance of the composite microporous film is insufficient for severe conditions such as battery oven tests being carried out in recent years.

The laminated microporous film disclosed in Patent Literature 2 also has still room to be improved from the viewpoint of simultaneously satisfying a good air permeability and a high film rupture temperature.

The present invention has been achieved in consideration of such a situation, and has an object to provide a laminated microporous film having a good balance between a good air permeability and a high film rupture temperature, and a

method for manufacturing the laminated microporous film, and a separator for a battery using the laminated microporous film.

Means for Solving the Problems

As a result of exhaustive studies to solve the above-mentioned problems, the present inventors have found that subjecting a laminated film of a specific resin film having a relatively high melting point and a resin film having a relatively low melting point to stretching under a specific condition is effective. The present inventors have found that a laminated microporous film can thereby be prepared which has a high film rupture temperature and has an air permeability and film rupture resistance suitable for a separator for a lithium ion secondary battery. These findings have led to the completion of the present invention.
That is, the present invention is as follows:

1. A laminated microporous film comprising a first microporous layer which is composed of a first resin composition, and a second microporous layer which is stacked on the first microporous layer and is composed of a second resin composition having a lower melting point than the first resin composition,
wherein the first microporous layer has a melt viscosity $\eta_A$ of 10,000 Pa·s or higher, and a ratio $\eta_A/\eta_B$ of the melt viscosity $\eta_A$ to the melt viscosity $\eta_B$ of the second microporous layer is from 0.01 to 10,
wherein the first resin composition is a thermoplastic resin composition comprising 100 parts by mass of a polypropylene resin and from 5 to 90 parts by mass of a polyphenylene ether resin, and wherein the first resin film which is composed of the first resin composition has a sea-island structure with a sea portion of a phase comprising the polypropylene resin and an island portion of a phase comprising the polyphenylene ether resin,
wherein the thermoplastic resin composition further comprises from 1 to 20 parts by mass of a compatibilizing agent with respect to 100 parts by mass of the polypropylene resin,
wherein the compatibilizing agent is a hydrogenated block copolymer obtained by hydrogenating a block copolymer consisting of at least one polymer block A mainly composed of a structural unit of a vinyl aromatic compound and at least one polymer block B mainly composed of a structural unit of a conjugated diene compound with a total of a 1,2-vinyl bond content and a 3,4-vinyl bond content of from 40 to 90%, and
wherein the second resin composition is a polyethylene-based resin composition.

2. The laminated microporous film according to item 1, wherein the island portion has a particle size of from 0.01 to 10 $\mu$m.

3. A method for manufacturing the laminated microporous film according to items 1 or 2, comprising the steps (1) and (2) below:

(1) a cold stretch step of cold stretching a laminate having the first resin film comprising the first resin composition and the second resin film comprising the second resin composition having a lower melting point than the melting point of the first resin composition, 1.05 or more times and 2.0 or less times in at least one direction while keeping the laminate at -20°C or higher and $(T_{mB} - 60)$°C or lower wherein $T_{mB}$ is the melting point (°C) of the second resin composition; and
(2) a hot stretch step of hot stretching the laminate cold stretched in the step (1) 1.05 or more times and 5.0 or less times in at least one direction while keeping the laminate at $(T_{mB} - 60)$°C or higher and lower than $(T_{mB} - 2)$°C.

4. The method for manufacturing the laminated microporous film according to item 3, further comprising the below step (3) after the step (2):

(3) a step of subjecting the laminate hot stretched in the step (2) to heat setting at a temperature of $(T_{mB} - 30)$°C or higher and $(T_{mB} - 2)$°C or lower.

5. Use of the laminated microporous film as defined in any one of items 1 or 2 as a separator for a battery.

6. The use according to item 5, wherein the battery is a lithium ion secondary battery.

7. Use of the laminated microporous film as defined in any one of items 1 or 2 as separation membrane.

## Effects of the Invention

The present invention can provide a laminated microporous film having a good balance between a good air permeability and a high film rupture temperature, a method for manufacturing the same, and a separator for a battery using the same.

## Embodiment for Carrying Out the Invention

Hereinafter, the invention (hereinafter, referred to as "the present embodiment") will be described in detail.

The laminated microporous film according to the present embodiment has a structure obtained by laminating a first microporous layer comprising a first resin composition and a second microporous layer comprising a second resin composition having a lower melting point than the first resin composition. The materials of the first resin composition and the second resin composition may be similar materials or dissimilar materials as long as these have different melting points measured by the method according to JIS K-7121 (hereinafter, simply referred to as "melting point").

Here, the difference in melting point between the first resin composition and the second resin composition is preferably 5°C or more, and more preferably 10°C or more. If the difference in melting point is 5°C or more, the resin layer having a high melting point is retained without melting, even if the resin layer having a low melting point melts down when the laminated microporous film is used as a separator for a battery, and the temperature in the interior of a battery rises due to an abnormal current. As a result, a film shape or a sheet shape of the separator for a battery is retained, being likely to thereby improve the safety.

The melt viscosity $\eta_A$ of the first microporous layer is 10,000 Pa·s or higher. The $\eta_A$ of 10,000 or higher can provide a laminated microporous film having a high film rupture temperature. The range of the melt viscosity $\eta_A$ is preferably 20,000 Pa·s or higher, more preferably 30,000 Pa·s or higher, and still more preferably 40,000 Pa·s or higher. In consideration of formability in manufacture, the melt viscosity is preferably 1,000,000 Pa·s or lower. From such a viewpoint, the melt viscosity may be 500,000 Pa·s or lower.

As disclosed in Patent Literature 1, in the conventional technology, use of a resin having a higher melting point has been considered to be necessary in order to improve the film rupture temperature. However, in the present embodiment, it has been found that even if the melting point is the same, a resin with a melt viscosity in the above-mentioned range has a remarkably improved film rupture temperature of a laminated microporous film.

Patent Literature 2 discloses a laminated microporous film whose raw material resin has a weight-average molecular weight in a specific range. However, the melt viscosity of a film cannot easily be predicted from the weight-average molecular weights of the raw material resins, since the melt viscosities of the first and second microporous layers in the present embodiment are largely affected by molecular weight distributions of the raw material resins, the thermal degradation in film formation and the like,

Making the ratio $\eta_A/\eta_B$ of the melt viscosity $\eta_A$ of the first microporous layer to the melt viscosity $\eta_B$ of the second microporous layer to be 0.01 to 10 can provide a laminated microporous film having a good balance between the porosity, the air permeability and the thermal shrinkage. The ratio $\eta_A/\eta_B$ is more preferably in the range of 0.05 to 5, and still more preferably in the range of 0.1 to 1. Here, in the case where the melt viscosity $\eta_A$ of the first microporous layer is 100,000 Pa·s or higher thus the measurement thereof is difficult, $\eta_A/\eta_B$ is calculated on the assumption that $\eta_A$ is 100,000 Pa·s.

Here, setting the ratio $\eta_A/\eta_B$ at 10 or lower, that is, setting the melt viscosity of a second microporous layer at certain times higher than that of a first microporous layer can suppress the rise in the air permeability of the second microporous layer, even if the laminated microporous film is subjected to a heat setting at a temperature near the melting point of the second resin composition. The reason for such increase in air permeability is not completely clarified. However, the reason is presumed that a low-melting point resin film partially melts by being subjected to a heat setting at such a temperature, and shrinks due to a residual stress in stretching, to make pore diameters small. Thus, setting the ratio $\eta_A/\eta_B$ in the range described above can suppress the rise in the air permeability, and can provide a laminated microporous film having also a high film rupture temperature.

Also in the case where the first microporous layer and the second microporous layer are separately stretched and thereafter laminated, setting the ratio $\eta_A/\eta_B$ at 10 or lower can suppress the increase in air permeability of the second microporous layer. In this case, it is presumed that setting the melt viscosity of the second microporous layer at certain times higher than that of the first microporous layer makes pores hardly collapsing when both the layers are laminated by thermocompression bonding, and makes a good air permeability.

On the other hand, setting the ratio $\eta_A/\eta_B$ at 0.01 or higher, that is, setting the melt viscosity of a second microporous layer at certain times lower than that of a first microporous layer is preferable from the viewpoint of easily forming the second microporous layer.

Here, the melt viscosity of each microporous layer means a melt viscosity at an angular velocity of 0.1 rad/sec calculated from a measurement of the dynamic melt viscoelasticity at 200°C. The dynamic viscoelasticity is measured with an

instrument described below and under the condition described below.
Measurement instrument: RMS800, made by Rheometrix Corp.
Measurement system: parallel plates, gap: 0.05 mm
Measurement temperature: 200°C
Measurement angular velocity: 100 rad/sec to 0.1 rad/sec
Strain: 10%

The laminated microporous film according to the present embodiment has a first microporous layer and a second microporous layer as described above, but the embodiment of the lamination is especially not limited. Specific examples of the lamination include (a) a laminated microporous film comprising one first microporous layer and one second microporous layer, (b) a laminated microporous film comprising one first microporous layer and second microporous layers laminated on both sides of the first microporous layer, (c) a laminated microporous film comprising one second microporous layer and first microporous layers laminated on both sides of the second microporous layer, and (d) a laminated microporous film in which each microporous layer is alternately arranged, for example, in a form of a first microporous layer - a second microporous layer - a first microporous layer - a second microporous layer.

Examples of methods for manufacturing the laminated microporous film according to the present embodiment include, using a T die or a circular die, (a) a method in which a laminated film of each resin film is molded by coextrusion method, and thereafter, the laminated film is stretched to be made porous, (b) a method in which a laminated film of each resin film is formed by laminate method in which the each resin film is separately extruded and then laminated, and thereafter, the laminated film is stretched to be made porous, and (c) a method in which each resin film is separately extruded, and further stretched to obtain microporous film, and thereafter, the microporous films are laminated. Among these methods, the method is preferable in which a laminated film of each resin film is formed by the laminate method in which the each resin film is separately extruded with a T die and then laminated, and thereafter, the laminated film is stretched to be made porous, from the viewpoint of the air permeability required for the laminated microporous film obtained in the present embodiment. On the other hand, the method of (c) also is preferable, though slightly inferior in the air permeability to the method of (a), from the viewpoint that the thermal shrinkage of a laminated microporous film can be made small.

In any of the manufacturing methods, a draw ratio after the extrusion, that is, a value obtained by dividing a taking-up speed (unit: m/min) of a film by an extrusion speed (which is a linear speed in the flowing direction of a melt resin passing through a die lip, and the unit is m/min) of a resin composition is preferably in the range of 10 to 500, more preferably 100 to 400, and still more preferably 150 to 350. A film is taken up such that the taking-up speed of the film is preferably about 2 to 400 m/min, and more preferably 10 to 200 m/min.

The film obtained by molding is desirably subjected to a heat treatment (annealing) as required. Examples of annealing methods include a method in which a film is brought into contact on a heated roll, or a method in which a film is exposed to a heated gas phase, a method in which a film is taken up on a core, and exposed to a heated gas phase or a heated liquid phase, and a method in combination thereof. The condition of these heat treatments is suitably determined depending on types of materials constituting the film and the like.

The heating temperature at which a high-melting point resin film alone is annealed is preferably ($T_{mA}$ - 50)°C or higher and ($T_{mA}$ - 2)°C or lower, and more preferably ($T_{mA}$ - 40)°C or higher and ($T_{mA}$ - 10)°C or lower. (Here, $T_{mA}$ is a melting point (°C) of a second resin composition.) On the other hand, the heating temperature at which a low-melting point resin film alone is annealed is preferably ($T_{mB}$ - 30)°C or higher and ($T_{mB}$ - 2)°C or lower, and more preferably ($T_{mB}$ - 15)°C or higher and ($T_{mB}$ - 2)°C or lower.

In the case where a high-melting point resin film and a low-melting point resin film are laminated and then the laminated film is annealed, the heating temperature is preferably ($T_{mB}$ - 30)°C or higher and ($T_{mB}$ - 2)°C or lower, and more preferably ($T_{mB}$ 15)°C or higher and ($T_{mB}$ - 2)°C or lower. The heating time is preferably 10 sec to 100 hours, and more preferably 1 min to 10 hours.

The annealing may be carried out before lamination of each film, or after that. In the case where the annealing is carried out before the lamination, the annealing can be carried out under the condition suitable for each of the high-melting point resin film and the low-melting point resin film. Thereby, a laminated microporous film better balanced in the porosity, the air permeability and the thermal shrinkage can be obtained. On the other hand, in the case where the annealing is carried out after the lamination, since resin films are laminated by thermocompression bonding in the state of having high ratios of amorphous portions of resins before the annealing, a laminated microporous film having a high adhesive strength can be obtained.

A first microporous layer is formed by subjecting a first resin film (hereinafter, referred to as "a high-melting point resin film") comprising a first resin composition having a higher melting point to a predetermined stretching treatment to thereby make the film porous. The first resin film has preferably an elastic recovery rate after the heat treatment of 80 to 95%, and more preferably 84 to 92%. A second microporous layer is formed by subjecting a second resin film (hereinafter, referred to as "a low-melting point resin film") comprising a second resin composition having a lower melting point to a predetermined stretching treatment to thereby make the film porous. The second resin film has preferably an

elastic recovery rate after the heat treatment of 50 to 80%, and more preferably 60 to 75%. If each resin film has an elastic recovery rate in these ranges, a laminated microporous film having an enough level of porousness can be obtained.

"Elastic recovery rate after the heat treatment" of a high-melting point resin film and a low-melting point resin film are determined as follows, respectively. A high-melting point resin film is annealed in the air at 130°C for 1 hour, and thereafter cut out into a strip with a width of 10 mm and a length of 50 mm to obtain a test piece. The test piece is set on a predetermined position of a tensile tester, and elongated to 100% in the longitudinal direction (that is, to a length of 100 mm) at a rate of 50 mm/min under the conditions of 25°C and a relative humidity of 65%. Thereafter, immediately, the test piece is loosened at the same rate (50 mm/min), and a length of the test piece when the load becomes 0 is measured. Then, based on the expression (1) shown below, "the elastic recovery rate after the heat treatment" of the high-melting point resin film is derived.

Elastic recovery rate after the heat treatment (%) = ((a length of the test piece when it is elongated to 100%) - (a length of the test piece when the load becomes 0 on loosening the load))/(a length of the test piece before it is elongated) × 100 (1)

A low-melting point resin film is annealed in the air at 130°C for 1 hour, and thereafter cut out into a strip with a width of 15 mm and a length of 2 inches (5.08 cm) to obtain a test piece. The test piece is set on a predetermined position of a tensile tester, and elongated to 50% in the longitudinal direction (that is, to a length of 3 inches =7.62cm) at a rate of 5.08 cm/min (2 inches/min) under the conditions of 25°C and a relative humidity of 65%. Then, the test piece is kept at the elongation state for 1 min, and thereafter, the test piece is loosened at the same rate (2 inches/min), and a length of the test piece when the load becomes 0 is measured. Then, based on the expression (2) shown below, "the elastic recovery rate after the heat treatment" of the low-melting point resin film is derived.

Elastic recovery rate after the heat treatment (%) = ((a length of the test piece when it is elongated to 50%) - (a length of the test piece when the load becomes 0 on loosening the load))/((a length of the test piece when it is elongated to 50%) - (a length of the test piece before it is elongated)) × 100 (2)

In the case where a laminated film is formed in advance by laminating a high-melting point resin film and a low-melting point resin film as in (a) and (b) described above, the method for manufacturing a laminated microporous film according to the present embodiment preferably comprises a cold stretch step of subjecting the laminated film to a first stretch to obtain a stretched laminated film. In the case where a high-melting point resin film and a low-melting point resin film are separately made porous, and then laminated as in (c) described above, the method for manufacturing a laminated microporous film according to the present embodiment preferably comprises a cold stretch step of subjecting the each film to a first stretch to obtain a stretched laminated film. The stretch temperature of the cold stretch is preferably - 20°C or higher and ($T_{mB}$ - 60)°C or lower, and more preferably 0°C or higher and 50°C or lower. If the stretch is carried out at a temperature of -20°C or higher, the film is hardly broken; and if the stretch is carried out at a temperature of ($T_{mB}$ - 60)°C or lower, the obtained laminated microporous film is likely to have a high porosity and a low air permeability. Here, the stretch temperature in the cold stretch step refers to a surface temperature of a film.

The stretch ratio in the cold stretch step is preferably 1.05 to 2.0 times, and more preferably 1.1 or more times and less than 2.0 times.

The cold stretch is carried out at least in one direction, but may be carried out in both directions of an extrusion direction of a film (hereinafter, referred to as "MD direction") and a width direction of the film (hereinafter, referred to as "TD direction"). Preferably, the stretch is carried out as uniaxial stretch only in the extrusion direction of a film.

The method for manufacturing a laminated microporous film according to the present embodiment preferably comprises a hot stretch step of carrying out a second stretch after the cold stretch step to obtain a stretched laminated film. The stretch temperature in the hot stretch step is preferably ($T_{mB}$ - 60)°C or higher and ($T_{mB}$ - 2)°C or lower, and

more preferably ($T_{mB}$ - 30)°C or higher and ($T_{mB}$ - 2)°C or lower.
If the stretch is carried out at a temperature of ($T_{mB}$ - 60)°C or higher, the stretch is easily carried out without breaking a film; and if the stretch is carried out at a temperature of ($T_{mB}$ - 2)°C or lower, a laminated microporous film having a low porosity and a high air permeability is easily obtained. Here, the stretch temperature in the hot stretch step refers to a surface temperature of a film.
The stretch ratio in the hot stretch step is preferably 1.05 or more times and 5.0 or less times, more preferably 1.1 times to 5.0 times, and still more preferably 2.0 times to 5.0 times.
The hot stretch is carried out at least in one direction, and may be carried out in both directions of MD and TD, but is preferably carried out in the same direction as the stretch direction in the cold stretch, and more preferably as uniaxial stretch only in the same direction as the stretch direction in the cold stretch.

The method for manufacturing a laminated microporous film according to the present embodiment preferably comprises a step of carrying out a heat setting at a temperature of ($T_{mB}$ - 30)°C or higher and ($T_{mB}$ - 2)°C or lower after the hot stretch step. Providing such a heat setting step is suitable not only from the viewpoint of being able to suppress the shrinkage in the stretch direction of a laminated microporous film due to a residual stress acting during stretching, but also from the viewpoint of improving the interlayer delamination strength of the obtained laminated microporous film.
Methods of the heat setting include a method in which a laminated microporous film is thermally shrunk to such a degree that the length of the laminated microporous film after the heat setting reduces by 10 to 50% (hereinafter, this method is referred to as "relaxation"), and a method of fixing the film so that the size in the stretch direction does not change.

The heat setting temperature is preferably ($T_{mB}$ - 30)°C or higher and ($T_{mB}$ - 2)°C or lower, and more preferably ($T_{mB}$ - 15)°C or higher and ($T_{mB}$ - 2)°C or lower. Here, the heat setting temperature refers to a surface temperature of a film.
In the cold stretch step, the hot stretch step, other stretch steps and the heat setting step described above, methods can be employed in which the stretch and the heat setting are carried out uniaxially and/or biaxially in one or two or more stages with a roll, a tenter, an autograph or the like. Above all, the uniaxial stretch and heat setting using rolls in two or more stages are preferable from the viewpoint of physical properties required for a laminated microporous film obtained by the present embodiment and applications thereof.

In the case where the laminated microporous film according to the present embodiment is manufactured by forming a laminated film of each resin film by the laminate method in which the each resin film is separately extruded and then laminated, and thereafter stretching the laminated film to make the film porous, preferably, a high-melting point resin film and a low-melting point resin film are passed between heated rolls and subjected to thermocompression bonding. In this case, the each resin film is wound out from an original film roll stand, and nipped and compression bonded between the heated rolls to be laminated. In laminating, the thermocompression bonding needs to be carried out so that the elastic recovery rate of the each resin film does not substantially decrease. Particularly in the case where a high-melting point resin film is interposed between two sheets of a low-melting point resin film and laminated, this method is suitably employed. Thereby, since curl (curvature) of an obtained laminated film is suppressed and the film is hardly susceptible to external injuries, the heat resistance, the mechanical strength, and the like of a finally obtained laminated microporous film become better. It is also preferred, when the laminated microporous film is used as a separator for a battery, since characteristics such as safety and reliability thereof are satisfied more sufficiently.

The temperature of the heated roll, that is, the thermocompression bonding temperature is preferably 120°C or higher and 140°C or lower, and more preferably 127°C or higher and 132°C or lower. If the thermocompression bonding temperature is 120°C or higher, the delamination strength between films laminated becomes high, and delamination is hardly generated in each stretch step thereafter. If the thermocompression bonding temperature is 140°C or lower, the low-melting point resin film does not melt and the elastic recovery rate does not decrease, and a laminated microporous film satisfying desired objects is likely to be easily obtained. The nipping pressure of 1 to 3 $kg/cm^2$ is suitable, and the winding-out speed of 0.5 to 8 m/min is suitable. The delamination strength of a laminated film is suitably in the range of 3 to 60 g/15 mm.

[First resin film (high-melting point resin film)]

The first microporous layer according to the present embodiment is obtained by stretching a high-melting point resin film formed of a first resin composition comprising a polyolefin such as polyethylene (PE), polypropylene (PP), polybutene-1, poly-4-methylpentene and ethylenepropylene copolymers, and an ethylene-tetrafluoroethylene copolymer as main components to make the film porous.
The first resin composition constituting a high-melting point resin film has a higher melting point than a second resin composition, and when the melting point thereof is, for example, 150°C to 280°C, a balance between the film rupture temperature and the film formability becomes good, which is preferable.
When the first resin composition constituting a high-melting point resin film is a thermoplastic resin composition comprising 100 parts by mass of a polypropylene resin and 5 to 90 parts by mass of a polyphenylene ether resin, a laminated microporous film having a higher heat resistance can be obtained, which is preferable.

Hereinafter, the thermoplastic resin composition will be described in detail.

[Polypropylene resin]

(a) A polypropylene resin (hereinafter, abbreviated to "PP" in some cases) used in the present embodiment includes homopolymers, random copolymers and block copolymers. The polypropylene resin is used singly or as a mixture of two or more. A polymerization catalyst used when a polypropylene resin is produced is not especially limited, and examples thereof include Ziegler-Natta catalysts and metallocene catalysts. The stereoregularity of a polypropylene resin is not especially limited, and isotactic or syndiotactic polypropylene resins are used.

A polypropylene resin with any crystallinity and any melting point can be used singly in the present embodiment even if it has any crystallinity and any melting point. However, depending on physical properties and applications of an obtained microporous film, a polypropylene resin may be used which is obtained by blending two types of polypropylene resins having different properties in a specific blending ratio.

A polypropylene resin used in the present embodiment can generally be selected from ones having a melt flow rate (which is measured at 230°C at a load of 2.16 kg according to ASTM D1238, the same hereinafter) in the range of preferably 0.1 to 100 g/10 min, and more preferably 0.1 to 80 g/10 min.

A polypropylene resin used in the present embodiment may be, in addition to the above-mentioned polypropylene resins, well-known modified polypropylene resins as described in Japanese Patent Laid-Open Nos. 44-15422, 52-30545, 6-313078 and 2006-83294. A polypropylene resin used in the present embodiment may further be a mixture of an above-mentioned polypropylene resin and the modified polypropylene resin in an optional proportion.

[Polyphenylene ether resin]

(b) A polyphenylene ether resin (hereinafter, abbreviated to "PPE" in some cases) used in the present embodiment includes ones having a repeating unit represented by the general formula (1) shown below.

[Formula 1]

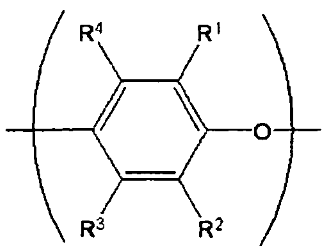

(1)

wherein $R^1$, $R^2$, $R^3$ and $R^4$ each independently denote a chemical species selected from the group consisting of a hydrogen atom, a halogen atom, a lower alkyl group having 1 to 7 carbon atoms, a phenyl group, a haloalkyl group, an aminoalkyl group, a hydrocarbonoxy group and a halohydrocarbonoxy group in which at least two carbon atoms separate a halogen atom and an oxygen atom.

Specific examples of PPE include poly (2, 6- dimethyl- 1, 4- phenylene ether) , poly (2- methyl- 6- ethyl- 1, 4- phenylene ether) , poly (2- methyl- 6- phenyl- 1, 4- phenylene ether) and poly (2, 6- dichloro- 1, 4- phenylene ether) . Examples of PPE further include a polyphenylene ether copolymer such as a copolymer of 2, 6- dimethylphenol and other phenols (for example, 2, 3, 6- trimethylphenol and 2- methyl- 6- butylphenol) . Particularly above all, poly (2, 6- dimethyl- 1, 4- phenylene ether) and a copolymer of 2, 6- dimethylphenol and 2, 3, 6- trimethylphenol are preferable, and poly (2, 6- dimethyl- 1, 4- phenylene ether) is more preferable.

The method for producing PPE is not especially limited, and any PPE obtained by a well-known production method can be used in the present embodiment.

As PPE used in the present embodiment, a well-known modified PPE may be used which is obtained by reacting the

above-mentioned PPE with a styrene based monomer and/or an α,β-unsaturated carboxylic acid or its derivative (for example, an ester compound and an acid anhydride compound) in the presence or absence of a radical generating agent, in a melt, solution, or slurry state at a temperature of 80 to 350°C. The PPE may further be a mixture of an above-mentioned PPE and the modified PPE in any proportion. The reduced viscosity of PPE used in the present embodiment is preferably 0.15 to 2.5, and more preferably 0.30 to 2.00.

The thermoplastic resin composition according to the present embodiment contains 100 parts by mass of (a) a polypropylene resin and 5 to 90 parts by mass of (b) a polyphenylene ether resin, preferably 10 to 80 parts by mass thereof, and more preferably 20 to 65 parts by mass thereof. Setting the content proportion of PPE in the range described above is suitable from the viewpoint of stretchability of an obtained laminated microporous film.

As PPE used in the present embodiment, in addition to the above-mentioned PPE, PPE to which polystyrene, high-impact polystyrene, syndiotactic polystyrene, and/or rubber-reinforced syndiotactic polystyrene and/or the like was added also may be suitably used.

[Compatibilizing agent]

The laminated microporous film according to the present embodiment preferably has a sea-island structure composed of a sea portion of a phase containing a polypropylene resin (preferably containing a polypropylene resin as a main component) and island portions of a phase containing a polyphenylene ether resin (preferably containing a polyphenylene ether resin as a main component). In this case, PPE resin is present as a dispersoid in a matrix of PP resin. Preferably, the particle diameter of the island portions is 0.01 μm to 10 μm. In order to satisfying these conditions, the thermoplastic resin composition according to the present embodiment especially preferably comprises a polypropylene resin, a polyphenylene ether resin and a compatibilizing agent. "Containing as a main component" and "mainly composed of " in the present description means that a specific component is contained in a proportion of preferably 50% by mass or more, and more preferably 80% by mass or more in the composition (matrix component) containing the specific component, and may be contained in 100% by mass.

A compatibilizing agent (c) used in the present embodiment acts as a dispersant to disperse and particulate the polyphenylene ether resin in the matrix of the polypropylene resin. The compatibilizing agent further produces an effect of imparting a good porosity and a good air permeability to the microporous film according to the present embodiment.

A compatibilizing agent (c) used in the present embodiment is preferably a hydrogenerated block copolymer from the viewpoint of the dispersibility of the polyphenylene ether resin. The hydrogenated block copolymer is a block copolymer obtained by adding hydrogen to a block copolymer composed of at least one polymer block A mainly composed of a structural unit of a vinyl aromatic compound and at least one polymer block B mainly composed of a structural unit of a conjugated diene compound.

Examples of the conjugated diene compound serving as the structural unit of the polymer block B includes one or two or more selected from the group consisting of butadiene, isoprene, 1, 3- pentadiene and 2, 3- dimethyl- 1, 3-butadiene. Above all, butadiene, isoprene and a combination thereof are preferable. The polymer block B mainly composed of a structural unit of a conjugated diene compound is preferably a polymer block containing at least 70% by mass or more of the structural unit of the conjugated diene compound, which is a homopolymer block of the conjugated diene compound, or a copolymer block of the conjugated diene compound and a monomer copolymerizable with the conjugated diene compound. As to the micro structure in the polymer block B (a bonding form of the conjugated diene compound) , the total of a 1, 2- vinyl bond amount and 3, 4- vinyl bond amount (hereinafter, abbreviated to "vinyl bond amount") is 40 to 90%, and preferably 45 to 85%. Here, "vinyl bond amount" refers to a proportion of the number of vinyl bonds remaining in the polymer block B after the polymerization to the number of vinyl bonds in the conjugated diene compound before the polymerization. The bonding form and "the vinyl bond amount" of a conjugated diene compound are determined from an infrared spectrum. A value of "a vinyl bond amount" determined using an NMR spectrum may be converted to a value determined from an infrared spectrum. The conversion can be made by determing "vinyl bond amounts" from an infrared spectrum and an NMR spectrum, and making a calibration curve between these measurements. If the vinyl bond amount is 40% or more, the laminated microporous film according to the present embodiment exhibits a better balance between the porosity and the air permeability.

Examples of the vinyl aromatic compound serving as the structural unit of the polymer block A include one or two or more selected from the group consisting of styrene, α-methylstyrene, vinyltoluene, p-tert-butylstyrene and diphenylethylene. Above all, styrene is preferable.

The polymer block A mainly composed of a structural unit of a vinyl aromatic compound is preferably a polymer block containing 70% by mass or more of the structural unit of the vinyl aromatic compound which is a homopolymer block of the vinyl aromatic compound, or a copolymer block of the vinyl aromatic compound and a monomer copolymerizable with the vinyl aromatic compound.

The number-average molecular weight measured by gel permeation chromatography using polystyrenes as standard

substances of the block copolymer having the above-mentioned structure is preferably in the range of 5,000 to 1,000,000. The molecular weight distribution as a ratio of the weight-average molecular weight (Mw) and the number-average molecular weight (Mn) measured by gel permeation chromatography using polystyrenes as standard substances is preferably 10 or less. The molecular structure of the block copolymer may be linear, branched, radial or any combination thereof.

A block copolymer having such a structure is converted to a hydrogenated block copolymer, that is, a hydrogenated substance of a vinyl aromatic compound-conjugated diene compound block copolymer by adding hydrogen to aliphatic double bonds (vinyl bonds) of a polymer block B contained in the block copolymer, and is used as a compatibilizing agent. The hydrogenation ratio of the aliphatic double bonds is preferably 80% or more based on the total amount of the aliphatic double bonds of the block copolymer before the hydrogenation. The hydrogenation ratio is determined from an infrared spectrum as in the above-mentioned vinyl bond amount, and may also be determined by converting a value of a hydrogenation ratio derived from an NMR spectrum to the value derived from an infrared spectrum. The proportion of a compatibilizing agent in the above-mentioned thermoplastic resin composition is preferably 1 to 20% by mass, and more preferably 1 to 15% by mass with respect to the total amount of the composition. Thereby, the dispersibility of a polyphenylene ether resin, and the porosity and the air permeability of the laminated microporous film according to the present embodiment due to the dispersibility become better.

The thermoplastic resin composition according to the present embodiment may contain, other than the above-mentioned components, additional components added as required, for example, olefin based elastomers, antioxidants, metal deactivators, thermal stabilizers, flame retardants (organophosphate compounds, ammonium polyphosphate compounds, aromatic halogen flame retardants and silicone flame retardants), fluoropolymers, plasticizers (low molecular weight polyethylenes, epoxidized soybean oil, polyethylene glycols and fatty acid esters), flame retardant aids such as antimony trioxide, weather (light) resistance improvers, nucleating agents for polyolefin, slipping agents, inorganic or organic fillers and reinforcements (polyacrylonitrile fibers, carbon black, titanium oxide, calcium carbonate, conductive metal fibers, conductive carbon black, and the like), various types of colorants, and mold lubricants, in the ranges thereof not damaging effects served by the present invention.

[Sea-island structure]

The high-melting point resin film according to the present embodiment preferably has a sea-island structure composed of a sea portion of a phase containing a polypropylene resin and island portions of a phase containing a polyphenylene ether resin.
"The sea-island structure" in the present embodiment refers to a structure in which a skeleton of a phase containing a polypropylene resin as a sea portion is formed around island components composed of particles of a phase containing a polyphenylene ether resin.
The sea-island structure (dispersed state) as described above can be easily measured and observed using a transmission electron microscope or the like. For example, after a high-melting point resin film which is a measurement object is placed on a sample stage, an osmium coating about 3 nm thick is applied on the high-melting point resin film, and the sea-island structure can be observed using a scanning electron microscope (HITACHI S-4700) whose acceleration voltage is set at 1 kV.

The particle diameter of island portions is preferably 0.01 μm to 10 μm, and more preferably 0.1 μm to 5 μm. Setting the particle diameter of island portions in this range can contribute to more uniformly dispersed open pores in the film thickness direction and the film plane direction of a laminated microporous film finally obtained. A laminated microporous film having open pores uniformly dispersed is suitable as a separator for a battery.
The above-mentioned particle diameter of island portions in the present embodiment is measured as follows.
A transmission electron microscopic photograph (magnification: 5,000X) of a high-melting point resin film which is a measurement object is acquired in the same way as the method for observing the sea-island structure. Then, 100 particles of a phase (island portions) containing a polyphenylene ether resin dispersed in a phase containing a polypropylene resin as a matrix (sea portion) is randomly selected. Then, the maximum length of each particle selected is measured as a major axis diameter, and the minimum length is measured as a minor axis diameter. The above-mentioned particle diameter is defined as the major axis diameter. It is preferred that an arithmetic average of the particle diameter of the above-mentioned 100 particles is in the above-mentioned range, and it is more preferred that the particle diameters of all the 100 particles are in the above-mentioned range.

The ratio of a major axis diameter and a minor axis diameter (major axis diameter/minor axis diameter) is preferably 1 to 5, and more preferably 1 to 3. Setting the ratio of a major axis diameter and a minor axis diameter in such a range is suitable from the viewpoint of the pore opening property of a laminated microporous film.
By suitably selecting the polypropylene resin, the polyphenylene ether resin and the compatibilizing agent that are used, it becomes possible to disperse particles (island portions), having the above-mentioned particle size and ratio of the major axis diameter and the minor axis diameter, of a phase containing the polyphenylene ether resin in a phase

containing the polypropylene resin as a matrix (sea portion).

In the present embodiment, a laminated microporous film obtained using a high-melting point resin film formed from a specific thermoplastic resin composition containing (a) a polypropylene resin and (b) a polyphenylene ether resin is a laminated microporous film having excellent porosity and air permeability, which can also be utilized for a separator for a lithium ion battery. Although the laminated microporous film is obtained using a high-melting point resin film having a phase containing the polypropylene resin as a sea portion, the laminated microporous film is a laminated microporous film improved in the heat resistance, which can maintain a form as a film even at a temperature exceeding the melting point of the polypropylene resin as high as 200°C. The improvement in the heat resistance should be as astonishing as cannot have been predicted at all from conventional technologies.

"The improvement in the heat resistance" used herein refers to a rise in the film rupture temperature indicated by a battery oven test having recently been carried out or the like. The laminated microporous film according to the present embodiment can achieve a film rupture temperature of 200°C or higher as is clear from the above. The laminated microporous film having a film rupture temperature of 200°C or higher according to the present embodiment can remarkably improve the heat resistance as a separator for a battery.

Details of a mechanism to achieve such a high film rupture temperature have not been clarified, but it is conceivable that since use of a resin composition containing PP and PPE forms a porous structure, having a morphology containing PP as a sea portion and PPE as island portions, the resin composition can maintain a high melt viscosity even after the film formation, thereby contributing to the improvement in the film rupture temperature.

[Low-melting point resin film]

The second microporous layer according to the present embodiment can be obtained by stretching a low-melting point resin film to make porous the film comprising a second resin composition containing, for example, a polyolefin resin such as a polyethylene resin or a polypropylene resin, and a saturated polyester resin such as a polyethylene terephthalate resin or a polybutylene terephthalate resin.

If the second resin composition constituting a low-melting point resin film has a melting point of from 100°C to 150°C, when it is used as a separator for a battery, the safety of the battery is remarkably improved, which is preferable. In order to obtain such a second resin composition, it requires just adding a resin having a melting point of from 100°C to 150°C in the resin composition. Examples of such a resin include polyethylene resins, and more specific examples thereof include so-called high-, intermediate- and low-density polyethylenes. Above all, high-density polyethylene resins are suitably used.

MFR of the second resin composition is preferably 0.01 to 10 g/10 min, more preferably 0.1 to 3 g/ 10 min, still more preferably 0.8 to 2.0 g/10 min, and most preferably 1.0 to 1.6 g/10 min. If MFR is 0.01 g/10 min or more, fish eyes are hardly generated in a low-melting point resin film; and if MFR is 10 g/10 min or less, the drawdown hardly occurs and the film formability becomes good.

The density of the second resin composition is preferably 945 to 970 kg/$m^3$, more preferably 955 to 970 kg/$m^3$, still more preferably 960 to 967 kg/$m^3$, and most preferably 963 to 967 kg/$m^3$. If the density is 945 kg/$m^3$ or more, a microporous film having a good air permeability can be obtained; and if the density is 970 kg/$m^3$ or less, the film hardly breaks in stretching.

[Physical properties of a laminated microporous film]

The porosity of the laminated microporous film according to the present embodiment is preferably 20% to 70%, more preferably 35% to 65%, and still more preferably 45% to 60%. Setting the porosity at 20% or more can secure a sufficient ion permeability when the laminated microporous film is used for battery applications. On the other hand, setting the porosity at 70% or less can secure a sufficient mechanical strength of the laminated microporous film. The laminated microporous film according to the present embodiment has a film thickness of preferably 5 to 40 μm, and more preferably 10 to 30 μm.

The porosity of the laminated microporous film according to the present embodiment can be adjusted in the above-mentioned range by suitably setting compositions, stretch temperatures, stretch ratios and the like of resin compositions constituting each layer.

The porosity of a laminated microporous film is calculated using the expression shown below from a volume and a mass of a sample of 10 cm x 10 cm square, which has been cut out from the film.

$$\text{Porosity (\%)} = (\text{the volume (cm}^3) - \text{the mass (g)/the density of the resin composition (g/cm}^3))/\text{the volume (cm}^3) \times 100$$

The air permeability of the laminated microporous film according to the present embodiment is preferably 10 sec/100 $cm^3$ to 5,000 sec/100 $cm^3$ more preferably 50 sec/100 $cm^3$ to 1,000 sec/100 $cm^3$, and still more preferably 100 sec/100 $cm^3$ to 500 sec/100 $cm^3$. Setting the air permeability at 5,000 sec/100 $cm^3$ or lower can contribute to secure a sufficient ion permeability of the laminated microporous film. On the other hand, setting the air permeability at 10 sec/100 $cm^3$ or higher is preferable from the viewpoint of providing a more homogeneous laminated microporous film having no defects.
The air permeability of the laminated microporous film according to the present embodiment can be adjusted in the above-mentioned range by suitably setting compositions, stretch temperatures, stretch ratios and the like of resin compositions constituting each layer.
The air permeability is measured using a Gurley air permeability tester according to JIS P-8117.
The microporous film according to the present embodiment is suitably used as a separator for a battery, specifically as a separator for a lithium ion secondary battery. The microporous film is additionally used as various types of separation membranes.

Examples

The present embodiment will then be described more specifically with Examples and Comparative Examples, but the present embodiment is not limited to the following Examples without departing from the gist. Evaluation methods of various physical properties of raw materials used were as follows.
The melt flow rate (MFR) was measured under the conditions of 210°C and 2.16 kg for a polypropylene resin, and 190°C and 2.16 kg for a polyethylene resin according to JIS K721 0, and the unit of MFR was g/10 min. The density of a polyethylene resin was a value measured according to JIS K7112, and the unit thereof was kg/$m^3$. The melt viscosity was a value obtained by fabricating a sheet of a sample (in the case where a first microporous layer and a second microporous layer were simultaneously integrally formed as a laminated microporous film, the each separated film was used as a sample) by press molding at 200°C, and measuring the melt viscosity under the same conditions as the before-mentioned measurement conditions of the melt viscosity, and the unit thereof was Pa·s.
Polypropylene resins, a polyphenylene ether resin, compatibilizing agents and polyethylene resins used were as follows.

1. Polypropylene resins

(a-1) A propylene homopolymer having an MFR of 0.4, and a melt viscosity of 61 ,000
(a-2) A propylene homopolymer having an MFR of 3.0, and a melt viscosity of 10,000

2. A polyphenylene ether resin

(b-1) PPE with a reduced viscosity of 0.54 obtained by oxidatively polymerizing 2,6-xylenol [0054]

3. Compatibilizing agents

(c- 1) A hydrogenated styrene- butadiene block copolymer having a structure of polystyrene (1)- hydrogenated polybutadiene- polystyrene (2) , and a bonded styrene amount of 43%, a number- average molecular weight of 95, 000, a total amount of 1, 2- vinyl bond and 3, 4- vinyl bond in the polybutadiene before the hydrogenation of 80%, a number- average molecular weight of the polystyrene (1) of 30, 000, a number- average molecular weight of the polystyrene (2) of 10, 000, and a hydrogenation ratio of the polybutadiene moiety of 99.9%
(c- 2) A hydrogenated styrene- isoprene block copolymer having a structure of polystyrene (1)- hydrogenated polyisoprene- polystyrene (2) , and a bonded styrene amount of 48%, a number- average molecular weight of 88, 000, a total amount of 1, 2- vinyl bond and 3, 4- vinyl bond in the polyisoprene before the hydrogenation of 55%, a number-average molecular weight of the polystyrene (1) of 21, 000, a number- average molecular weight of the polystyrene (2) of 21, 000, and a hydrogenation ratio of the polyisoprene moiety of 90%

4. Polyethylenes

(d-1) A polyethylene having a density of 962, an MFR of 0.3 and a melt viscosity of 37,000
(d-2) A polyethylene having a density of 964, an MFR of 1.0 and a melt viscosity of 6,800
(d-3) A polyethylene having a density of 962, an MFR of 0.6 and a melt viscosity of 13,000
(d-4) A polyethylene having a density of 965, an MFR of 3.0 and a melt viscosity of 3,600

Various physical properties of films were measured as follows.

(1) Film thickness (μm)

The film thickness was measured with a dial gauge (trade name: "PEACOCK No. 25", made by Ozaki Mfg. Co., Ltd.)

(2) Porosity (%)

A sample of 10 cm x 10 cm square was cut out from a film, and the porosity was calculated using the expression shown below form a volume and a mass of the sample.

$$\text{Porosity (\%)} = (\text{the volume (cm}^3) - \text{the mass (g)/a density of a resin composition (g/cm}^3))/\text{the volume (cm}^3) \times 100$$

(3) Air permeability (sec/100 cc)

The air permeability was measured with a Gurley air permeability tester according to JIS P-8117. The air permeability was determined in terms of a film thickness of 20 μm.

(4) Film rupture temperature (film rupture resistance)

Figure 1 shows a schematic view of a measuring device of a film rupture temperature. (A) is an overall view thereof; and (B) and (C) are plane views schematically showing a sample in the measuring device. First, as shown in (B), a laminated microporous film 1 was laminated on a nickel foil 2A of 10 μm in thickness; and fixed to the nickel foil 2A with Teflon® tapes (shown with hatched portion in the figure. The same hereinafter) above the end parts in the longitudinal direction (MD direction) (X direction in the figure) of the laminated microporous film 1. Here, the laminated microporous film 1 used had been in advance impregnated with a 1-mol/L lithium borofluoride solution (solvent: propylene carbonate/ethylene carbonate/γ-butyrolactone of 1/1/2 (in mass ratio)) as an electrolyte solution. On the other hand, as shown in (C), a Teflon® tape was pasted on a nickel foil 2B of 10 μm in thickness to mask the nickel foil 2B. Here, a portion of a window (opening) of 15 mm x 10 mm was left on the center part of the nickel foil 2B.

Then, as shown in (A) , the nickel foil 2A and the nickel foil 2B processed as described above were superposed so as to interpose the laminated microporous film 1 therebetween. The two sheets of the nickel foils 2A and 2B were interposed from both sides thereof between glass plates 3A and 3B. At this time, the portion of the window of the nickel foil 2B and the laminated microporous film 1 were positioned so as to face each other. The two sheets of the glass plates 3A and 3B were clipped to be fixed with commercially available double clips (not shown in the figure) . Then, the assembly was housed in an oven 8.

Then, an electric resistance tester 4 (trade name: "AG- 4311", an LCR meter made by Ando Electronic Co., Ltd.) was connected to the nickel foils 2A and 2B. A thermocouple 5 connected to a temperature tester 6 was fixed on the glass plate 3A using Teflon®. A data collector 7 to record measured electric resistances and temperatures was connected to the electric resistance tester 4 and the temperature tester 6.
Using such devices, while the temperature of the glass plate 3A was being raised from 25°C to 200°C at 2°C/min by the oven, the electric resistance between the nickel foils 2A and 2B was continuously measured. The electric resistance was measured on alternating current of 1 kHz. A temperature at which the electric resistance between the nickel foils 2A and 2B falls below $10^3$ Ω once it has reached $10^3$ Ω was defined as a film rupture (short) temperature. The case where the film rupture temperature was less than 180°C was evaluated as "poor"; the case where that was 180°C or higher and less than 200°C, as "good"; and the case where that was 200°C or higher, as "very good".

(5) Thermal shrinkage

A sample of 12 cm x 12 cm square was cut out from a film; two marks (four marks in total) were put with an interval of 10 cm in each of MD direction and TD direction on the sample; and the sample was allowed to stand still in an oven at 100°C or 140°C for 60 min in the state of being sandwiched between papers. The sample was taken out from the oven and cooled, and thereafter, the lengths (cm) between the marks in MD and TD were measured, and the thermal shrinkages in MD and TD were calculated by the expression shown below.

$$\text{Thermal shrinkage (\%) in MD direction} = (10 - \text{the length (cm) in MD direction after the heating})/10 \times 100$$

$$\text{Thermal shrinkage (\%) in TD direction} = (10 - \text{the length (cm) in TD direction after the heating})/10 \times 100$$

[Manufacture Example 1]

The polypropylene resin (a-1) was charged in a single-screw extruder whose screw diameter was 20 mm, L/D was 30, and whose temperature was set at 260°C through a feeder, and extruded from a T die with a lop thickness of 3.0 mm at the front end of the extruder. Immediately thereafter, the melted resin was exposed to a cool air at 25°C, and taken up with a cast roll cooled at 95°C under the conditions of a draw ratio of 250 times and a taking-up speed of 10 m/min to form a high-melting point resin film (A-1). The elastic recovery rate after the heat treatment of the high-melting point resin film was 90%.

[Manufacture Example 2]

100 parts by mass of the polypropylene resin (a-1), 11 parts by mass of the polyphenylene ether resin (b-1) and 3 parts by mass of the compatibilizing agent (c-1) were prepared. A twin-screw extruder having a first raw material feed port and a second raw material feed port was prepared.
The raw material ports were located nearly at the center of the extruder. The (a-1) component, the (b-1) component and the (c-1) component were fed to the twin-screw extruder set at a temperature of 260 to 320°C and at a screw rotation frequency of 300 rpm, and melted and kneaded to obtain a thermoplastic resin composition as pellets.
A high-melting point resin film (A-2) was formed in the same way as in Manufacture Example 1, except for using the pellets of the thermoplastic resin composition thus obtained instead of the polypropylene resin (a-1). The particle diameter of island portions, which is a phase containing PPE, in the high-melting point resin film was 0.1 to 2.5 $\mu$m. The elastic recovery rate after the heat treatment of the high-melting point resin film was 88%. The particle diameter ($\mu$m) of island portions was measured as described above, and the range (from a maximum particle diameter to a minimum particle diameter) of the particle diameter measured was indicated. As is clear from the fact that the particle size was able to be measured, a sea-island structure also was observed.

[Manufacture Example 3]

85 parts by mass of the polypropylene resin (a-1), 15 parts by mass of (a-2), 67 parts by mass of the polyphenylene ether resin (b-1) and 17 parts by mass of the compatibilizing agent (c-2) were prepared. Using a twin-screw extruder having a first raw material feed port and a second raw material feed port (located nearly at the center of the extruder),which was set at a temperature of from 260 to 320°C and at a screw rotation frequency of 300 rpm, the (b-1) component, or the (b-1) component and a portion of the (a-1) and (a-2) components were fed to the extruder through the first raw material feed port of the extruder; and the (a-1) and (a-2) components and the (c-1) component, or the remaining portion of the (a-1) and (a-2) components and the (c-1) component were fed to the extruder through the second raw material feed port thereof, and melted and kneaded to obtain a thermoplastic resin composition as pellets.
The pellets of the thermoplastic resin composition thus obtained was charged in a single-screw extruder with a screw diameter of 20 mm and a L/D of, whose temperature was set at 260°C through a feeder, and extruded from a T die with a lip thickness of 0.5 mm installed at the front end of the extruder; immediately thereafter, the melted resin was exposed to a cool air at 25°C, and taken up with a cast roll cooled at 95°C under the conditions of a draw ratio of 50 times and a taking-up speed of 10 m/min to form a high-melting point resin film (A-3). The elastic recovery rate after the heat treatment

of the high-melting point resin film was 30%.
The particle diameter of island portions, which is a phase containing PPE, in the high-melting point resin film was 0.1 to 2.5 μm. The particle diameter (μm) of island portions was measured as described above, and the range (from a maximum particle diameter to a minimum particle diameter) of the particle diameter measured was indicated. As is clear from the fact that the particle diameter was able to be measured, a sea-island structure also was observed.

[Manufacture Example 4]

The polypropylene resin (a-2) was charged in a single-screw extruder with a screw diameter of 20 mm and a L/D of 30, whose temperature was set at 220°C through a feeder, and extruded from a T die with a lip thickness of 3.0 mm installed at the front end of the extruder. Immediately thereafter, the melted resin was exposed to a cool air at 25°C, and taken up with a cast roll cooled at 95°C under the conditions of a draw ratio of 250 times and a taking-up speed of 10 m/min to form a high-melting point resin film (A-4). The elastic recovery rate after the heat treatment of the high-melting point resin film was 89%.

[Manufacture Example 5]

The polyethylene resin (d-1) was charged in a single-screw extruder with a screw diameter of 20 mm and a L/D of 30, whose temperature was set at 220°C through a feeder, and extruded from a T die with a lop thickness of 3.0 mm installed at the front end of the extruder. Immediately thereafter, the melted resin was exposed to a cool air at 25°C, and taken up with a cast roll cooled at 95°C under the conditions of a draw ratio of 300 times and a taking-up speed of 10 m/min to form a low-melting point resin film (B-1). The elastic recovery rate after the heat treatment of the low-melting point resin film was 72%.

[Manufacture Example 6]

The polyethylene resin (d-2) was charged in a single-screw extruder with a screw diameter of 20 mm and a L/D of 30, whose temperature was set at 200°C through a feeder, and extruded from a T die with a lip thickness of 3.0 mm installed at the front end of the extruder. Immediately thereafter, the melted resin was exposed to a cool air at 25°C, and taken up with a cast roll cooled at 95°C under the conditions of a draw ratio of 300 times and a taking-up speed of 10 m/min to form a low-melting point resin film (B-2). The elastic recovery rate after the heat treatment of the low-melting point resin film was 73%.

[Manufacture Example 7]

The polyethylene resin (d-3) was charged in a single-screw extruder with a screw diameter of 20 mm and a L/D of 30, whose temperature was set at 180°C through a feeder, and extruded from a T die with a lip thickness of 3.0 mm installed at the front end of the extruder. Immediately thereafter, the melted resin was exposed to a cool air at 25°C, and taken up with a cast roll cooled at 95°C under the conditions of a draw ratio of 300 times and a taking-up speed of 10 m/min to form a low-melting point resin film (B-3).
The elastic recovery rate after the heat treatment of the low-melting point resin film was 72%.

[Manufacture Example 8]

The polyethylene resin (d-4) was charged in a single-screw extruder with a screw diameter of 20 mm and a L/D of 30, whose temperature was set at 180°C through a feeder, and extruded from a T die with a lop thickness of 3.0 mm installed at the front end of the extruder. Immediately thereafter, the melted resin was exposed to a cool air at 25°C, and taken up with a cast roll cooled at 95°C under the conditions of a draw ratio of 300 times and a taking-up speed of 10 m/min to form a low-melting point resin film (B-4).
The elastic recovery rate after the heat treatment of the low-melting point resin film was 70%.

[Example 1]

A three-layer laminated film having a structure of the high-melting point resin films (A-1) as both outer layers and the low-melting point resin film (B-1) as an inner layer, obtained by interposing the low-melting point resin film (B-1) between the high-melting point resin films (A-1), was manufactured as follows. The high-melting point resin films (A-1) and the low-melting point resin film (B-1) were each wound out at a winding-out speed of 4.0 m/min, introduced to a heating roll, subjected to thermocompression bonding at a thermocompression bonding temperature of 130°C and at a

line pressure of 2.0 kg/cm, and thereafter, introduced at the same speed to a cooling roll at 25°C, and taken up to obtain a laminated film. The laminated film was annealed for one hour in a circulating hot air oven heated at 130°C.
Then, the laminated film after the annealing was uniaxially stretched 1.3 times in the longitudinal direction at a temperature of 25°C to obtain a stretched laminated film (a cold stretch step). Then, the stretched laminated film was uniaxially stretched 3.0 times in the longitudinal direction at a temperature of 125°C to obtain a laminated microporous film (a hot stretch step). Then, the laminated microporous film was relaxed to 0.8 times at a temperature of 125°C for heat setting. The film thickness, porosity, air permeability, thermal shrinkage and film rupture temperature (film rupture resistance) of the obtained laminated microporous film having first microporous layers and a second microporous layer laminated were measured. The results are shown in Table 1.

[Example 2]

A laminated microporous film was obtained in the same way as in Example 1, except for using the high-melting point resin film (A-2) in place of the high-melting point resin film (A-1). The film thickness, porosity, air permeability, thermal shrinkage and film rupture temperature (film rupture resistance) of the obtained laminated microporous film were measured. The results are shown in Table 1.

[Example 3]

A laminated microporous film was obtained in the same way as in Example 2, except for using the low-melting point resin film (B-2) in place of the low-melting point resin film (B-1). The film thickness, porosity, air permeability, thermal shrinkage and film rupture temperature (film rupture resistance) of the obtained laminated microporous film were measured. The results are shown in Table 1.

[Example 4]

A laminated microporous film was obtained in the same way as in Example 3, except that heat setting was not carried out. The film thickness, porosity, air permeability, thermal shrinkage and film rupture temperature (film rupture resistance) of the obtained laminated microporous film were measured. The results are shown in Table 1.

[Example 5]

A laminated microporous film was obtained in the same way as in Example 3, except for altering the stretch temperature in the hot stretch step to 115°C, the stretch ratio to 2.7 times, the heat setting temperature to 120°C and the relaxation ratio to 0.9 times. The film thickness, porosity, air permeability, thermal shrinkage and film rupture temperature (film rupture resistance) of the obtained laminated microporous film were measured. The results are shown in Table 1.

[Example 6]

A laminated microporous film was obtained in the same way as in Example 2, except for using the low-melting point resin film (B-3) in place of the low-melting point resin film (B-1). The film thickness, porosity, air permeability, thermal shrinkage and film rupture temperature (film rupture resistance) of the obtained laminated microporous film were measured. The results are shown in Table 1.

[Example 7]

Two sheets of the high-melting point resin films (A-2) and one sheet of the low-melting point resin film (B-2) were prepared, and each annealed for one hour in a circulating hot air oven heated at 130°C. Then, these sheets were separately uniaxiallly stretched 1.3 times in MD direction at a temperature of 25°C (a cold stretch step), and then introduced to a heating roll and uniaxially stretched 2.7 times in MD direction at a temperature of 115°C (a hot stretch step). The microporous films were then relaxed to 0.9 times at a temperature of 120°C for heat setting. Thereafter, the three films were superposed such that both outer layers were the high-melting point resin films (A-2), and an inner layer was the low-melting point resin film (B-2), and wound out at a winding-out speed of 1.0 m/min, then subjected to thermocompression bonding at a thermocompression bonding temperature of 130°C and at a line pressure of 2.0 kg/cm to obtain a laminated microporous film having high-melting point microporous layers A and a low-melting point microporous layer B laminated. The film thickness, porosity, air permeability and thermal shrinkage of the obtained laminated microporous film were measured. The results are shown in Table 2.

[Example 8]

Two sheets of the high-melting point resin films (A-2) and one sheet of the low-melting point resin film (B-2) were prepared, and each annealed for one hour in a circulating hot air oven heated at 130°C. Then, the high-melting point resin films (A-2) were uniaxiallly stretched 1.2 times in MD direction at a temperature of 25°C (a cold stretch step), and then introduced to a heating roll and uniaxially stretched 2.7 times in MD direction at a temperature of 115°C (a hot stretch step), and relaxed to 0.9 times at a temperature of 120°C for heat setting. On the other hand, the low-melting point resin film (B-2) was uniaxially stretched 1.5 times in MD direction at a temperature of 25°C (a cold stretch step), and then introduced to a heating roll and uniaxially stretched 2.5 times in MD direction at a temperature of 115°C (a hot stretch step), and relaxed to 0.9 times at a temperature of 120°C for heat setting. Thereafter, the three films were superposed such that both outer layers were the high-melting point resin films (A-2), and an inner layer was the low-melting point resin film (B-2), and wound out at a winding-out speed of 1.0 m/min, then subjected to thermocompression bonding at a thermocompression bonding temperature of 128°C and at a line pressure of 2.0 kg/cm to obtain a laminated microporous film having high-melting point microporous layers A and a low-melting point microporous layer B laminated. the film thickness, porosity, air permeability and thermal shrinkage of the obtained laminated microporous film were measured. The results are shown in Table 2.

[Example 9]

A laminated microporous film was obtained in the same way as in Example 8, except for altering the hot stretch temperature for the high-melting point resin film (A-2) to 130°C, and the heat setting temperature to 140°C. The film thickness, porosity, air permeability and thermal shrinkage of the obtained laminated microporous film were measured. The results are shown in Table 2.

[Example 10]

A laminated microporous film was obtained in the same way as in Example 9, except for altering the annealing temperature for the high-melting point resin film (A-2) to 150°C. The film thickness, porosity, air permeability and thermal shrinkage of the obtained laminated microporous film were measured. The results are shown in Table 2.

[Example 11]

Two sheets of the high-melting point resin films (A-3) and one sheet of the low-melting point resin film (B-1) were prepared, and only the low-melting point resin film (B-1) was annealed for one hour in a circulating hot air oven heated at 130°C. Then, the high-melting point resin films (A-3) were uniaxially stretched 1.5 times in MD direction at a temperature of 25°C (a cold stretch step), and then introduced to a heating roll and uniaxially stretched 2.0 times in MD direction at a temperature of 150°C (a hot stretch step), and relaxed to 0.9 times at a temperature of 170°C for heat setting. On the other hand, the low-melting point resin film (B-1) was uniaxially stretched 1.5 times in MD direction at a temperature of 25°C (a cold stretch step), and then introduced to a heating roll and uniaxially stretched 2.5 times in MD direction at a temperature of 115°C (a hot stretch step), and relaxed to 0.9 time at a temperature of 120°C for heat setting. Thereafter, the three films were superposed such that both outer layers were the high-melting point resin films (A-3), and an inner layer was the low-melting point resin film (B-1), and wound out at a winding-out speed of 1.0 m/min, then subjected to thermocompression bonding at a thermocompression bonding temperature of 130°C and at a line pressure of 2.0 kg/cm to obtain a laminated microporous film. The film thickness, porosity, air permeability and thermal shrinkage of the obtained laminated microporous film were measured. The results are shown in Table 2.

[Example 12]

A laminated microporous film was obtained in the same way as in Example 11, except for using the low-melting point resin film (B-3) in place of the low-melting point resin film (B-1). The film thickness, porosity, air permeability and thermal shrinkage of the obtained laminated microporous film were measured . The results are shown in Table 2.

[Comparative Example 1]

A laminated microporous film was obtained in the same way as in Example 2, except for using the low-melting point resin film (B-4) in place of the low-melting point resin film (B-1). The film thickness, porosity, air permeability, thermal shrinkage and film rupture temperature (film rupture resistance) of the obtained laminated microporous film were measured. The results are shown in Table 1. Although the film rupture temperature was good, the air permeability was

high, resulting in being inferior to Examples.

[Comparative Example 2]

A laminated microporous film was obtained in the same way as in Example 1, except for using the high-melting point resin film (A-4) in place of the high-melting point resin film (A-1). The film thickness, porosity, air permeability, thermal shrinkage and film rupture temperature (film rupture resistance) of the obtained laminated microporous film were measured. The results are shown in Table 1. Although the porosity, air permeability and thermal shrinkage were well balanced, the film rupture temperature was 160 to 180°C, resulting in being inferior to Examples.

[Comparative Example 3]

A laminated microporous film was obtained in the same way as in Example 1, except for using the high-melting point resin film (A-4) in place of the high-melting point resin film (A-1), and using the low-melting point resin film (B-4) in place of the low-melting point resin film (B-1). The film thickness, porosity, air permeability, thermal shrinkage and film rupture temperature (film rupture resistance) of the obtained laminated microporous film were measured. The results are shown in Table 1. The air permeability was high, and the film rupture temperature was 160 to 180°C, resulting in being inferior to Examples.

[Comparative Example 4]

A laminated microporous film was obtained in the same way as in Example 10, except for using the low-melting point resin film (B-4) in place of the low-melting point resin film (B-2). The film thickness, porosity, air permeability, thermal shrinkage and film rupture temperature (film rupture resistance) of the obtained laminated microporous film were measured. The results are shown in Table 2. Although the film rupture temperature was good, the air permeability was high, resulting in being inferior to Examples.

[Comparative Example 5]

A laminated microporous film was obtained in the same way as in Example 10, except for using the high-melting point resin film (A-4) in place of the high-melting point resin film (A-2). The film thickness, porosity, air permeability, thermal shrinkage and film rupture temperature (film rupture resistance) of the obtained laminated microporous film were measured. The results are shown in Table 2. The film rupture temperature was 160 to 180°C, resulting in being inferior to Examples.

[Comparative Example 6]

A laminated microporous film was obtained in the same way as in Example 11, except for using the low-melting point resin film (B-2) in place of the low-melting point resin film (B-1). The film thickness, porosity, air permeability, thermal shrinkage and film rupture temperature (film rupture resistance) of the obtained laminated microporous film were measured. The results are shown in Table 2. Although the film rupture temperature was good, the air permeability was high, resulting in being inferior to Examples.

[Table 1]

| | | Example 1 | Example 2 | Example 3 | Example 4 | Example 5 | Example 6 | Comparative Example 1 | Comparative Example 2 | Comparative Example 3 |
|---|---|---|---|---|---|---|---|---|---|---|
| High-Melting Point Resin Film | | A-1 | A-2 | | | | | A-2 | A-4 | A-4 |
| Low-Melting Point Resin Film | | B-1 | | B-2 | | | B-3 | B-4 | B-1 | B-4 |
| Melting Point of First Resin Composition | | 165 | 165 | | | | | 165 | | 165 |
| Melting Point of Second Resin Composition | | 133 | | 132 | | | 132 | 134 | 133 | 134 |
| Melt Viscosity of First Microporous Layer $\eta_A$ (Pa·s) | | 31000 | 44000 | | | | | 44000 | 7800 | |
| Melt Viscosity of Second Microporous Layer $\eta_B$ (Pa·s) | | 86000 | | 8000 | | | 15000 | 4000 | 86000 | 4000 |
| Ratio of Melt Viscosities $\eta_A/\eta_B$ | | 0.36 | 0.51 | 5.5 | | | 2.9 | 11 | 0.09 | 2.0 |
| Annealing Condition of High-Melting Point Resin Film | | 130°C × 1 hr | | | | | | | | |
| Annealing Condition of Low-Melting Point Resin Film | | 130°C × 1 hr | | | | | | | | |
| Cold Stretch Conditions | Temperature (°C) | 25 | | | | | | | | |
| | Stretch Ratio | 1.3 times | | | | | | | | |
| Hot Stretch Conditions | Temperature (°C) | 125 | | | | 115 | 125 | 125 | | |
| | Stretch Ratio | 3 times | | | | 2.7 times | 3 times | 3 times | | |
| Heat Setting Conditions | Temperature (°C) | 125 | | | No heat setting | 120 | 125 | 125 | | |
| | Stretch Ratio | 0.8 times | | | | 0.9 times | 0.8 times | 0.8 times | | |
| Film Thickness of Laminated Microporous Film (μm) | | 24 | 25 | 24 | 24 | 24 | 24 | 25 | 25 | 24 |

(continued)

| | | Example 1 | Example 2 | Example 3 | Example 4 | Example 5 | Example 6 | Comparative Example 1 | Comparative Example 2 | Comparative Example 3 |
|---|---|---|---|---|---|---|---|---|---|---|
| Film Thickness of First Microporous Layer ($\mu m$) | | 8.5 | 9.0 | 8.5 | 8.5 | 8.5 | 8.5 | 9.0 | 9.0 | 8.5 |
| Film Thickness of Second Microporous Layer ($\mu m$) | | 7.0 | 7.0 | 7.0 | 7.0 | 7.0 | 7.0 | 7.0 | 7.0 | 7.0 |
| Porosity (%) | | 48 | 49 | 47 | 50 | 49 | 49 | 42 | 48 | 43 |
| Air Permeability (sec/100 cc) | | 370 | 390 | 450 | 320 | 330 | 360 | 830 | 400 | 900 |
| Film rupture temperature (Film rupture resistance) | | good | very good | very good | very good | very good | very good | good | poor | Poor |
| MD Thermal Shrinkage (%) | 100°C | 4 | 5 | 6 | 10 | 7 | 8 | 5 | 5 | 5 |
| | 140°C | 32 | 35 | 34 | 47 | 42 | 43 | 34 | 33 | 34 |
| TD Thermal Shrinkage (%) | 100°C | 0 | 0 | 0 | 0 | 0 | 0 | 0 | 0 | 0 |
| | 140°C | -2 | -2 | -1 | -2 | -2 | 0 | -2 | -1 | -1 |

[Table 2]

| | | Example 7 | Example 8 | Example 9 | Example 10 | Example 11 | Example 12 | Comparative Example 4 | Comparative Example 5 | Comparative Example 6 |
|---|---|---|---|---|---|---|---|---|---|---|
| High-Melting Point Resin Film | | A-2 | | | | A-3 | | A-2 | A-4 | A-3 |
| Low-Melting Point Resin Film | | B-2 | | | | B-1 | B-3 | B-4 | B-2 | B-2 |
| Melting Point of First Resin Composition | | 165 | | | | 165 | | 165 | 165 | 165 |
| Melting Point of Second Resin Composition | | 132 | | | | 133 | 132 | 134 | 132 | |
| Melt Viscosity of First Microporous Layer $\eta_A$ (Pa·s) | | 44000 | | | | >100000 | | 44000 | 7800 | >100000 |
| Melt Viscosity of Second Microporous Layer $\eta_B$ (Pa·s) | | 8000 | | | | 86000 | 15000 | 4000 | 8000 | |
| Ratio of Melt Viscosities $\eta_A/\eta_B$ | | 5.5 | | | | 1.2 | 6.7 | 11 | 1.0 | 12.5 |
| Annealing Condition of High-Melting Point Resin Film | | 130°C × 1 hr | | | 150°Cx1 hr | No annealing | | 150°C × 1 hr | | No annealing |
| Annealing Condition of Low-Melting Point Resin Film | | 130°C × 1 hr | | | | | | | | |
| Cold Stretch Condition of High-Melting Point Resin Film | Temperature (°C) | 25 | | | | | | | | |
| | Stretch Ratio | 1.3 times | 1.2 times | | | 1.5 times | | 1.2 times | | 1.5 times |
| Hot Stretch Condition of High-Melting Point Resin Film | Temperature (°C) | 115 | | 130 | | 150 | | 130 | | 150 |
| | Stretch Ratio | 2.7 times | | | | 2.0 times | | 2.7 times | | 2.0 times |

(continued)

| | | Example 7 | Example 8 | Example 9 | Example 10 | Example 11 | Example 12 | Comparative Example 4 | Comparative Example 5 | Comparative Example 6 |
|---|---|---|---|---|---|---|---|---|---|---|
| Heat Setting Condition of High-Melting Point Resin Film | Temperature (°C) | 120 | | 140 | | 170 | | 140 | | 170 |
| | Stretch Ratio | 0.9 times | | | | | | | | |
| Cold Stretch Conditions of Low-MeltingPoint Resin Film | Temperature (°C) | 25 | | | | | | | | |
| | Stretch Ratio | 1.3 times | 1.5 times | | | | | | | |
| Hot Stretch Conditions of Low-MeltingPoint Resin Film | Temperature (°C) | 115 | | | | | | | | |
| | Stretch Ratio | 2.7 times | 2.5 times | | | | | | | |
| Heat Setting Conditions of Low-MeltingPoint Resin Film | Temperature (°C) | 120 | | | | | | | | |
| | Stretch Ratio | 0.9 times | | | | | | | | |
| Film Thickness of Laminated Microporous Film (μm) | | 24 | 25 | 25 | 25 | 26 | 26 | 25 | 24 | 26 |
| Film Thickness of First Microporous Layer (μm) | | 8.5 | 9.0 | 9.0 | 9.0 | 9.5 | 9.5 | 9.0 | 8.5 | 9.5 |
| Film Thickness of Second Microporous Layer (μm) | | 7.0 | 7.0 | 7.0 | 7.0 | 7.0 | 7.0 | 7.0 | 7.0 | 7.0 |
| Porosity (%) | | 46 | 46 | 46 | 49 | 45 | 46 | 42 | 41 | 41 |
| Air Permeability (sec/100 cc) | | 460 | 410 | 410 | 350 | 430 | 440 | 780 | 430 | 710 |
| Film rupture temperature (Film rupture resistance) | | very good | very good | very good | very good | very good | very good | very good | poor | Very good |

(continued)

| | | Example 7 | Example 8 | Example 9 | Example 10 | Example 11 | Example 12 | Comparative Example 4 | Comparative Example 5 | Comparative Example 6 |
|---|---|---|---|---|---|---|---|---|---|---|
| MD Thermal Shrinkage (%) | 100°C | 8 | 7 | 2 | 3 | 5 | 5 | 4 | 2 | 6 |
| | 140°C | 40 | 40 | 25 | 29 | 35 | 34 | 31 | 26 | 36 |
| TD Thermal Shrinkage (%) | 100°C | 0 | 0 | 0 | 0 | 0 | 0 | 0 | 0 | 0 |
| | 140°C | -2 | -2 | 0 | 0 | -1 | -1 | -1 | 0 | 0 |

Brief Description of Drawings

[Figure 1] Figure 1 is a schematic view of a measuring device of a film rupture temperature.

Reference Signs List

| | |
|---|---|
| 1 | Laminated microporous film |
| 2A | Nickel foil |
| 2B | Nickel foil |
| 3A | Glass plate |
| 3B | Glass plate |
| 4 | Electric resistance tester |
| 5 | Thermocouple |
| 6 | Temperature tester |
| 7 | Data collector |
| 8 | Oven |

## Claims

**1.** A laminated microporous film comprising a first microporous layer which is composed of a first resin composition, and a second microporous layer which is stacked on the first microporous layer and is composed of a second resin composition having a lower melting point than the first resin composition,
wherein the first microporous layer has a melt viscosity $\eta_A$ of 10,000 Pa·s or higher, and a ratio $\eta_A/\eta_B$ of the melt viscosity $\eta_A$ to the melt viscosity $\eta_B$ of the second microporous layer is from 0.01 to 10,
wherein the first resin composition is a thermoplastic resin composition comprising 100 parts by mass of a polypropylene resin and from 5 to 90 parts by mass of a polyphenylene ether resin, and wherein the first resin film which is composed of the first resin composition has a sea-island structure with a sea portion of a phase comprising the polypropylene resin and an island portion of a phase comprising the polyphenylene ether resin,
wherein the thermoplastic resin composition further comprises from 1 to 20 parts by mass of a compatibilizing agent with respect to 100 parts by mass of the polypropylene resin,
wherein the compatibilizing agent is a hydrogenated block copolymer obtained by hydrogenating a block copolymer consisting of at least one polymer block A mainly composed of a structural unit of a vinyl aromatic compound and at least one polymer block B mainly composed of a structural unit of a conjugated diene compound with a total of a 1,2-vinyl bond content and a 3,4-vinyl bond content of from 40 to 90%, and
wherein the second resin composition is a polyethylene-based resin composition.

**2.** The laminated microporous film according to claim 1, wherein the island portion has a particle size of from 0.01 to 10 $\mu$m.

**3.** A method for manufacturing the laminated microporous film according to claims 1 or 2, comprising the steps (1) and (2) below:

(1) a cold stretch step of cold stretching a laminate having the first resin film comprising the first resin composition and the second resin film comprising the second resin composition having a lower melting point than the melting point of the first resin composition, 1.05 or more times and 2.0 or less times in at least one direction while keeping the laminate at -20°C or higher and $(T_{mB} - 60)$°C or lower wherein $T_{mB}$ is the melting point (°C) of the second resin composition; and
(2) a hot stretch step of hot stretching the laminate cold stretched in the step (1) 1.05 or more times and 5.0 or less times in at least one direction while keeping the laminate at $(T_{mB} - 60)$°C or higher and lower than $(T_{mB} - 2)$°C.

**4.** The method for manufacturing the laminated microporous film according to claim 3, further comprising the below step (3) after the step (2):

(3) a step of subjecting the laminate hot stretched in the step (2) to heat setting at a temperature of ($T_{mB}$ - 30) °C or higher and ($T_{mB}$ - 2)°C or lower.

**5.** Use of the laminated microporous film as defined in any one of claims 1 or 2 as a separator for a battery.

**6.** The use according to claim 5, wherein the battery is a lithium ion secondary battery.

**7.** Use of the laminated microporous film as defined in any one of claims 1 or 2 as separation membrane.

**Patentansprüche**

**1.** Laminierte mikroporöse Folie, umfassend eine erste mikroporöse Schicht, die aus einer ersten Harzzusammensetzung besteht, und eine zweite mikroporöse Schicht, die auf die erste mikroporöse Schicht gestapelt ist und aus einer zweiten Harzzusammensetzung besteht, die einen niedrigeren Schmelzpunkt als die erste Harzzusammensetzung aufweist,
wobei die erste mikroporöse Schicht eine Schmelzviskosität $\eta_A$ von 10 000 Pa·s oder mehr aufweist und das Verhältnis $\eta_A/\eta_B$ der Schmelzviskosität $\eta_A$ zur Schmelzviskosität $\eta_B$ der zweiten mikroporösen Schicht 0,01 bis 10 beträgt;
wobei die erste Harzzusammensetzung eine thermoplastische Harzzusammensetzung ist, die 100 Massenteile eines Polypropylenharzes und 5 bis 90 Massenteile eines Polyphenylenetherharzes umfasst, und wobei die erste Harzschicht, die aus der ersten Harzzusammensetzung besteht, eine Meer-Insel-Struktur mit einem Meerteil aus einer Phase, die das Polypropylenharz umfasst, und einem Inselteil aus einer Phase, die das Polyphenylenetherharz umfasst, aufweist;
wobei die thermoplastische Harzzusammensetzung weiterhin 1 bis 20 Massenteile eines Kompatibilisierungsmittels auf 100 Massenteile des Polypropylenharzes umfasst;
wobei das Kompatibilisierungsmittel ein hydriertes Blockcopolymer ist, das durch Hydrieren eines Blockcopolymers erhalten wird, das aus wenigstens einem Polymerblock A, der hauptsächlich aus einer Struktureinheit aus einer vinylaromatischen Verbindung besteht, und wenigstens einem Polymerblock B, der hauptsächlich aus einer Struktureinheit aus einer konjugierten-Dien-Verbindung besteht, mit einem Gesamtgehalt an 1,2-Vinylbindungen und einem Gesamtgehalt an 3,4-Vinylbindungen von 40 bis 90% besteht; und
wobei die zweite Harzzusammensetzung eine Harzzusammensetzung auf Polyethylenbasis ist.

**2.** Laminierte mikroporöse Folie gemäß Anspruch 1, wobei der Inselteil eine Teilchengröße von 0,01 bis 10 $\mu$m aufweist.

**3.** Verfahren zur Herstellung der laminierten mikroporösen Folie gemäß Anspruch 1 oder 2, umfassend die folgenden Schritte (1) und (2):

(1) einen Kaltstreckschritt, bei dem ein Laminat, das die erste Harzschicht, die die erste Harzzusammensetzung umfasst, und die zweite Harzschicht, die die zweite Harzzusammensetzung mit einem niedrigeren Schmelzpunkt als die erste Harzzusammensetzung umfasst, aufweist, kalt in wenigstens einer Richtung auf das 1,05-fache oder mehr und das 2,0-fache oder weniger gestreckt wird, während das Laminat auf -20 °C oder höher und ($T_{mB}$-60)°C oder niedriger gehalten wird, wobei $T_{mB}$ der Schmelzpunkt (°C) der zweiten Harzzusammensetzung ist; und
(2) einen Heißstreckschritt, bei dem das Laminat, das in Schritt (1) kalt gestreckt wurde, heiß in wenigstens einer Richtung auf das 1,05-fache oder mehr und das 5,0-fache oder weniger gestreckt wird, während das Laminat auf ($T_{mB}$-60)°C oder höher und niedriger als ($T_{mB}$-2)°C gehalten wird.

**4.** Verfahren zur Herstellung der laminierten mikroporösen Folie gemäß Anspruch 3, weiterhin umfassend den folgenden Schritt (3) nach Schritt (2):

(3) einen Schritt, bei dem das Laminat, das in Schritt (2) heiß gestreckt wurde, einer thermischen Fixierung bei einer Temperatur von ($T_{mB}$-30)°C oder höher und ($T_{mB}$-2)°C oder niedriger unterzogen wird.

**5.** Verwendung der laminierten mikroporösen Folie gemäß einem der Ansprüche 1 oder 2 als Separator für eine Batterie.

**6.** Verwendung gemäß Anspruch 5, wobei die Batterie eine Lithiumionen-Sekundärbatterie ist.

**7.** Verwendung der laminierten mikroporösen Folie gemäß einem der Ansprüche 1 oder 2 als Trennmembran.

**Revendications**

**1.** Film microporeux stratifié comprenant une première couche microporeuse qui est composée d'une première composition de résine, et une seconde couche microporeuse qui est empilée sur la première couche microporeuse et est composée d'une seconde composition de résine ayant un point de fusion plus bas que la première composition de résine,
où la première couche microporeuse a une viscosité à l'état fondu $\eta_A$ de 10 000 Pa.s ou plus, et un rapport $\eta_A/\eta_B$ de la viscosité à l'état fondu $\eta_A$ à la viscosité à l'état fondu $\eta_B$ de la seconde couche microporeuse est de 0,01 à 10, où la première composition de résine est une composition de résine thermoplastique comprenant 100 parties en masse d'une résine de polypropylène et de 5 à 90 parties en masse d'une résine de polyphénylène éther, et où le premier film de résine qui est composé de la première composition de résine a une structure mer-île avec une partie mer d'une phase comprenant la résine de polypropylène et une partie île d'une phase comprenant la résine de polyphénylène éther,
où la composition de résine thermoplastique comprend en outre de 1 à 20 parties en masse d'un agent compatibilisant par rapport à 100 parties en masse de la résine de polypropylène,
où l'agent compatibilisant est un copolymère séquencé hydrogéné obtenu par hydrogénation d'un copolymère séquencé consistant en au moins une séquence polymère A composée principalement d'une unité structurale d'un composé vinyle aromatique et au moins une séquence polymère B composée principalement d'une unité structurale d'un composé diène conjugué avec un total d'une teneur en liaison 1,2-vinyle et une teneur en liaison 3,4-vinyle de 40 à 90 %, et
où la seconde composition de résine est une composition de résine à base de polyéthylène.

**2.** Film microporeux stratifié selon la revendication 1, où la partie île a une taille de particule de 0,01 à 10 $\mu$m.

**3.** Procédé pour fabriquer le film microporeux stratifié selon la revendication 1 ou 2, comprenant les étapes (1) et (2) ci-dessous :

(1) une étape d'étirage à froid d'étirage à froid d'un stratifié ayant le premier film de résine comprenant la première composition de résine et le second film de résine comprenant la seconde composition de résine ayant un point de fusion plus bas que le point de fusion de la première composition de résine, 1,05 fois ou plus et 2,0 fois ou moins dans au moins une direction tout en maintenant le stratifié à -20°C ou plus et ($T_{mB}$ - 60)°C ou moins où $T_{mB}$ est le point de fusion (°C) de la seconde composition de résine ; et
(2) une étape d'étirage à chaud d'étirage à chaud du stratifié étiré à froid dans l'étape (1) 1,05 fois ou plus et 5,0 fois ou moins dans au moins une direction tout en maintenant le stratifié à ($T_{mB}$ - 60)°C ou plus et en-dessous de ($T_{mB}$ - 2)°C.

**4.** Procédé pour fabriquer le film microporeux stratifié selon la revendication 3, comprenant en outre l'étape (3) ci-dessous après l'étape (2) :

(3) une étape d'exposition du stratifié étiré à chaud dans l'étape (2) à un thermofixage à une température de ($T_{mB}$ - 30)°C ou plus et ($T_{mB}$ - 2)°C ou moins.

**5.** Utilisation du film microporeux stratifié tel que défini dans l'une quelconque des revendications 1 ou 2 comme séparateur pour une batterie.

**6.** Utilisation selon la revendication 5, où la batterie est une batterie secondaire à ions lithium.

**7.** Utilisation du film microporeux stratifié tel que défini dans l'une quelconque des revendications 1 ou 2 comme membrane de séparation.

FIG. 1

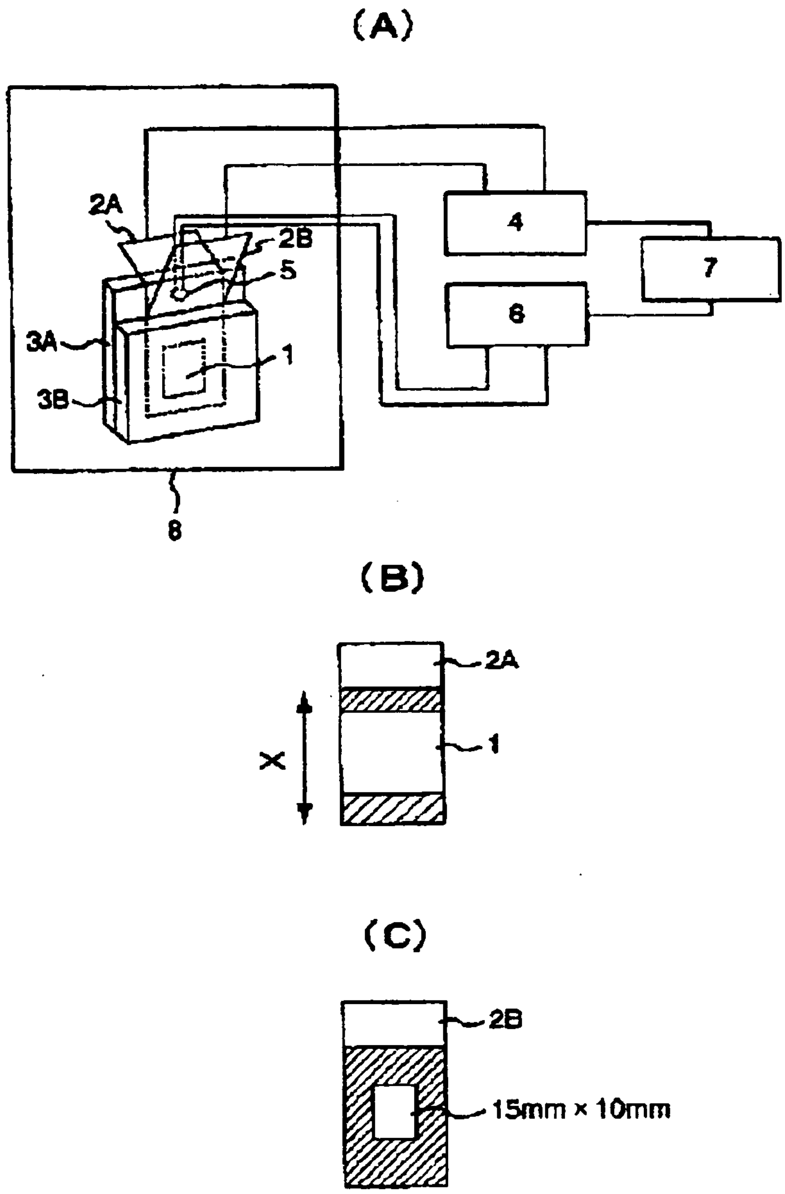

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 3003830 B
- JP 3939778 B
- EP 2261275 A
- JP 4415422 B
- JP 52030545 A
- JP 6313078 A
- JP 2006083294 A